(19) Europäisches Patentamt
European Patent Office
Office européen des brevets

(11) Publication number: 0 339 566 A2

(12) # EUROPEAN PATENT APPLICATION

(21) Application number: 89107454.4

(51) Int. Cl.4: C08F 283/01

(22) Date of filing: 25.04.89

(30) Priority: 25.04.88 JP 100395/88

(43) Date of publication of application:
02.11.89 Bulletin 89/44

(84) Designated Contracting States:
DE FR GB

(71) Applicant: NIPPON OIL AND FATS COMPANY, LIMITED
10-1, Yuraku-cho 1-chome
Chiyoda-ku Tokyo(JP)

(72) Inventor: Kato, Kenji
2-14-3, Takasaki
Oita-shi Oita-ken(JP)
Inventor: Koga, Nariyoshi
2-26-1-101, Akeno Nishi
Oita-shi Oita-ken(JP)

(74) Representative: Wehnert, Werner, Dipl.-Ing. et al
Patentanwälte Dipl.-Ing. Graalfs, Dipl.-Ing. Hauck, Dipl.-Ing. Wehnert, Dr.-Ing. Döring
Dr.rer.nat. Beines Mozartstrasse 23
D-8000 München 2(DE)

(54) **Unsaturated polyester resin composition.**

(57) An unsaturated polyester resin composition contains (a) an unsaturated polyester, (b) a vinyl monomer copolymerizable with the unsaturated polyester and (c) 0.5 to 80 parts by weight of a maleimide compound based on 100 parts by weight of said vinyl monomer.

EP 0 339 566 A2

Xerox Copy Centre

# Unsaturated Polyester Resin Composition

## BACKGROUND OF THE INVENTION

This invention relates to an unsaturated polyester resin composition and, more particularly, to an unsaturated polyester resin composition containing an unsaturated polyester, a vinyl monomer and a maleimide compound.

The unsaturated polyester resin is extensively used in the form of a fiber reinforced plastics by being processed by a method consisting usually in mixing glass fibers and/or inorganic fillers to the resin and heating or curing by curing agents at ambient temperature. More specifically, automotive parts or electrical components are produced by a curing method such as a sheet molding compound method (SMC method) or a bulk molding compound method (BMC method), while fishing boats, sewage purifiers or pool walling members are manufactured by an ambient temperature curing method, such as a hand lay-up method or a spray-up method.

However, the physical properties of the conventional cured molded body are not necessarily satisfactory and, as compared with the thermoplastic engineering resins having better moldability, there has been desired an unsaturated polyester resin having better thermal resistance or a rapid curing type resin having longer handling time, that is, gelation time.

Conventionally, for improving the thermal resistance of unsaturated polyester, there is employed a method of increasing the degree of unsaturation or cross-linking density of the unsaturated polyester or adding a filler having a higher thermal resistance to the polyester. For improving the operability at the curing time, there is employed a method of adding a polymerization regulator or using a curing catalyst in combination.

However, these methods present disadvantages in that the fillers affect the properties of the resin other than the thermal resistance and hence cannot be used in more than a predetermined amount, and the polymerization regulator, while prolonging the pot life, may give rise to poor or retarded curing during the subsequent curing reaction.

## SUMMARY OF THE INVENTION

It is a principal object of the present invention to provide an unsaturated polyester resin composition which has high thermal resistance and which may be cured under a wide range of curing conditions.

It is another object of the present invention to provide an unsaturated polyester resin composition which may be reacted quickly and has a long gelation time at the time of the curing reaction and in which the produced cured product exhibits high thermal resistance.

The above and other objects of the invention will become apparent from the following description.

In accordance with the present invention, there is provided an unsaturated polyester resin composition comprising (a) an unsaturated polyester, (b) a vinyl monomer copolymerizable with the unsaturated polyester and (c) 0.5 to 80 parts by weight of a maleimide compound based on 100 parts by weight of the vinyl monomer.

## PREFERRED EMBODIMENTS OF THE INVENTION

The present invention will be explained in more detail hereinbelow.

According to the present invention, the unsaturated polyester (a) may be produced by condensing an unsaturated dibasic acid, such as maleic anhydride or fumaric acid or a mixture of the unsaturated dibasic acid with a saturated dibasic acid, such as phthalic anhydride, isophthalic acid, adipic acid or tetrachlorophthalic anhydride with a polyalcohol, such as ethylene glycol, propylene glycol, 1,3-butylene glycol, diethylene glycol, dipropylene glycol, neopentyl glycol or bisphenol dioxyethyl ether, preferably at a ratio of 1 : 0.5 to 2 mols and more preferably at a ratio of 1 : 1, at 170 to 200 °C under, for example, nitrogen. The commercially available unsaturated polyester may also be employed.

According to the present invention, the vinyl monomers (b) copolymerizable with the above unsaturated polyester (a) may be enumerated by, for example, styrene, o-chlorostyrene, vinyl toluene, methyl methacrylate, diallyl phthalate, triallyl cyanurate or diallyl benzene phosphonate. These may be employed alone or as a mixture. The relative contents of the above vinyl monomers (b) are preferably 5 to 70 parts by

weight and more preferably 10 to 60 parts by weight to 100 parts by weight of the above unsaturated polyester.

According to the present invention, the maleimide compound (c) may be represented by the following formula of:

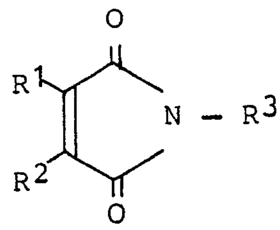

wherein $R^1$ and $R^2$ each represent a hydrogen atom, a methyl group or a halogen atom and $R^3$ represents a hydrogen atom, a straight-chained or branched alkyl group having 1 to 18 carbon atoms, a halogen-substituted alkyl group, a cycloalkyl group, and aryl group having 6 to 12 carbon atoms or an aralkyl group. The maleimide compounds (c) represented by the above formula may include, for example maleimide, N-methyl maleimide, N-ethyl maleimide, N-n-propyl maleimide, N-i-propyl maleimide, N-n-butyl maleimide, N-i-butyl maleimide, N-t-butyl maleimide, N-pentyl maleimide, N-hexyl maleimide, N-cyclohexyl maleimide, N-lauryl maleimide, N-stearyl maleimide, N-phenyl maleimide, N-benzyl maleimide, N-o-toluyl maleimide, N-p-toluyl maleimide, N-methylchloro maleimide or N-phenylmethyl maleimide.

The relative contents of the above maleimide compounds (c) to 100 parts by weight of the vinyl monomers (b) are 0.5 to 80 parts by weight. If the contents are less then 0.5 parts by weight, the effect of improving the thermal resistance cannot be exhibited. On the other hand, when the contents are in excess of 80 parts by weight, the physical properties of the cured product are undesirably lowered.

For preparing the unsaturated polyester resin composition of the present invention, the unsaturated polyester (a) and the vinyl monomer (b) may be mixed with the maleimide compound (c) under agitation to produce a homogeneous solution. A polymerization inhibitor may be usually added to the reaction system for improving the stability during storage time. For producing a cured product with the use of the unsaturated polyester resin composition, a curing agent such as organic peroxides or a mixture of the organic peroxides with dimethylaniline or cobalt naphthenate. If necessary, the composition may be used in the form of a compound or a prepreg by addition of a filler and/or a reinforcing agent, such as glass fibers or inorganic materials.

With the use of the unsaturated polyester resin composition of the present invention, the gelation or handling time during the curing operation may be prolonged, the operability may be improved, the cycling time may be reduced and the curing reaction itself may be performed expeditiously. Also the thermal resistance and resistance to boiling of the molded products may be improved so that the composition may be advantageously employed in automotive parts or electrical components.

## EXAMPLES OF THE INVENTION

The present invention will be explained in more detail with reference to the Examples and Comparative Examples. However, these Examples are given for the sake of illustration and are not intended for limiting the scope of the invention.

### Example 1

78 g of maleic anhydride, 178 g of phthalic anhydride and 167 g of propylene glycol were charged into a 500 ml four-mouthed flask fitted with a stirrer, a thermometer, a nitrogen gas blowing pipe and a condenser. The resulting mixture was stirred while a nitrogen gas was circulated at the rate of about 100 ml/min. and heated gradually. The temperature was raised to 150° over about one hour and stirring was continued for one hour. The reaction temperature was then raised gradually so that the temperature at the top of the condenser remained below 100° C, and the reaction temperature was then maintained at 210° C. After termination of the distillation of the water produced by condensation, the acid value of the reaction liquid was measured. When the acid value of 40 was reached, the reation was discontinued to cool the reaction mass. Then, 200 g of a styrene monomer and 50 g of N-methyl maleimide was added to the

produced reaction liquid. After the liquid was stirred until the homogeneous state was reached, 0.05 g of hydroquinone was added to the liquid. The produced unsaturated polyester resin composition presented a pale yellow to brown color.

Examples 2 to 7

N-substituted maleimide was added to each of the marketed unsaturated polyester resins containing styrene as vinyl monomers, as shown in Table 1, to produce an unsaturated polyester resin composition.

Table 1

| Preparation of Unsaturated Polyester Resin Composition | | | | | | |
|---|---|---|---|---|---|---|
| Ex. | 2 | 3 | 4 | 5 | 6 | 7 |
| Unsaturated Polyester Resin * | Unsaturated Polyester Resin (Ortho Phthalic Type) ⌈EPORACK G-110AL⌋ (Nippon Shokubai Kagaku Kogyo Co., Ltd.) (A) | | Unsaturated Polyester Resin (Iso-phthalic Type) ⌈POLYMAL 6305⌋ (Takeda Chemical Industries, Ltd.) (B) | | Unsaturated Polyester Resin (Bisphenol Type) ⌈ATLACK 382-05⌋ (Kao Ltd.) (C) | |
| Amounts Used (g) | 100 | 100 | 100 | 100 | 100 | 100 |
| N-Substituted Maleimide | N-Phenyl Maleimide | N-Cyclohexyl Maleimide | N-Lauryl Maleimide | N-Benzyl Maleimide | N-Stearyl Maleimide | N-o-Methylphenyl Maleimide |
| Amounts Used (g) | 1 | 20 | 2 | 25 | 5 | 10 |

* A mixture containing 30 to 40 wt.% of styrene

Example 8 to 17

The curing reaction was then performed, using the unsaturated polyester resin compositions obtained in the preceding Examples. The measurement was performed in accordance with JIS K-6901. The curing temperatures, the kinds and the amounts of the curing agents employed, and the physical properties of the produced cured products, are shown collectively in Table 2.

Comparative Examples 1 to 3

The curing reactions were carried out by using the resins (A), (B) and (C) shown in Table 1 as the unsaturated polyester resins. The measurement was performed in accordance with JIS K-6901. The curing temperatures, the kinds and the amounts of the curing agents employed, and the physical properties of the produced cured products, are shown collectively in Table 2.

It is noted that the Comparative Examples 1, 2 and 3 represent the comparative examples of the Examples 9, 15 and 17 and that the compositions of these Comparative Examples are inferior in properties to those of the corresponding Examples.

Table 2

Examples and Comparative Examples of Curing Reaction

| No. | Examples 8 | 9 | 10 | 11 | 12 | 13 | 14 | 15 | 16 | 17 | Comparative Examples 1 | 2 | 3 |
|---|---|---|---|---|---|---|---|---|---|---|---|---|---|
| Unsaturated Polyester Resin Composition | Ex. 1 | Ex. 3 | Ex. 4 | Ex. 5 | Ex. 6 | Ex. 2 | Ex. 3 | Ex. 4 | Ex. 5 | Ex. 7 | A | B | C |
| Curing Temperature (°C) | 80 | 80 | 80 | 80 | 80 | 25 | 25 | 25 | 25 | 10 | 80 | 25 | 10 |
| Kinds of Curing Agents and Amounts Used to Composition (wt.% to Composition) | BPO* 1.0 | BPO 1.0 | BPO 1.0 | BPO 1.0 | BPO 1.0 | BPO 1.0 Dimethyl-aniline0.3 | BPO 1.0 Dimethyl-aniline0.3 | BPO 1.0 Dimethyl-aniline0.3 | BPO 1.0 Dimethyl-aniline0.3 | MEKPO * 1.0 6%-Cobalt naphthenate0.5 | BPO 1.0 | BPO 1.0 Dimethyl-aniline0.3 | MEKPO 1.0 6%-Cobalt naphthenate0.5 |
| Gelation Time (min.) * | 5.2 | 4.9 | 6.0 | 6.5 | 9.0 | 8.5 | 9.0 | 7.0 | 8.8 | 52.0 | 4.6 | 6.7 | 48.0 |
| Curing Time (min.) * | 7.0 | 6.2 | 8.0 | 7.8 | 12.1 | 14.5 | 12.4 | 13.5 | 13.0 | 68.0 | 8.6 | 13.7 | 72.3 |
| Curing Time-Gelation Time | 1.8 | 1.3 | 2.0 | 1.3 | 3.1 | 6.0 | 3.4 | 6.5 | 4.2 | 16.0 | 4.0 | 7.0 | 24.3 |
| Max. Heating Temp. (°C) | 222 | 235 | 199 | 210 | 208 | 129 | 209 | 129 | 154 | 135 | 212 | 127 | 135 |
| Barcoal Hardness (936 Type) | 49 | 54 | 65 | 68 | 66 | 40 | 65 | 34 | 39 | 49 | 44 | 32 | 37 |
| Increase in Weight During Immersion in Boiling Water (wt.%, 2 hours) | 0.4 | 0.3 | 0.4 | 0.4 | 0.3 | 0.5 | 0.4 | 0.7 | 0.5 | 0.6 | 0.6 | 0.8 | 0.9 |
| Thermal Deformation Temp. (°C) * | 65 | 73 | 70 | 76 | 64 | 62 | 70 | 60 | 62 | 68 | 60 | 54 | 53 |

* Gelation Time; Time elapsed until the temperature rises 5°C from the curing temperature
* Curing Time; Time elapsed until max. heating temperature is reached from curing temperature
* Thermal Deformation Temperature; JIS K-7207
* PERMECK N (MEKPO); Methylethylketone peroxide (Nippon Oil and Fats Co., Ltd.)
* NYPER B (BPO); Benzoylperoxide (Nippon Oil and Fats Co., Ltd.)

## Claims

1. An unsaturated polyester resin composition comprising (a) an unsaturated polyester, (b) a vinyl monomer copolymerizable with said unsaturated polyester and (c) 0.5 to 80 parts by weight of a maleimide compound based on 100 parts by weight of said vinyl monomer.

2. The composition according to claim 1 wherein said unsaturated polyester (a) is produced by condensing an acid selected from the group consisting of an unsaturated dibasic acid and a mixture of an unsaturated dibasic acid and a saturated dibasic acid, and a polyalcohol.

3. The composition according to claim 2 wherein said acid and the polyalcohol are mixed at a ratio of 1 : 0.5 to 2 mols and condensed at 170° to 200° C.

4. The composition according to claim 2 wherein said unsaturated dibasic acid is selected from the group consisting of maleic anhydride, fumaric acid and mixtures thereof.

5. The composition according to claim 2 wherein said saturated dibasic acid is selected from the group consisting of phthalic anhydride, isophthalic acid, adipic acid, tetrachlorophthalic anhydride and mixtures thereof.

6. The composition according to claim 2 wherein said polyalcohol is selected from the group consisting of ethylene glycol, propylene glycol, 1,3-butylene glycol, diethylene glycol, dipropylene glycol, neopentyl glycol, bisphenol dioxyethyl ether and mixtures thereof.

7. The composition according to claim 1 wherein said vinyl monomer (b) copolymerizable with said unsaturated polyester is selected from the group consisting of styrene, o-chlorostyrene, vinyl toluene, methyl methacrylate, diallyl phthalate, triallyl cyanurate, diallyl benzene phosphonate and mixtures thereof.

8. The composition according to claim 1 wherein said vinyl monomer (b) is mixed in an amount of 5 to 70 parts by weight to 100 parts by weight of said unsaturated polyester.

9. The composition according to claim 1 wherein said maleimide compound (c) has the following formula of:

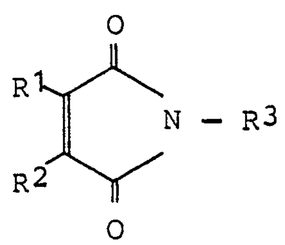

wherein $R^1$ and $R^2$ each represent a hydrogen atom, a methyl group or a halogen atom and $R^3$ represents a hydrogen atom, a straight-chained or branched alkyl group having 1 to 18 carbon atoms, a halogen-substituted alkyl group, a cycloalkyl group, an aryl group having 6 to 12 carbon atoms or an aralkyl group.

10. The composition according to claim 9 wherein the maleimide compound (c) represented by the formula is selected from the group consisting of maleimide, N-methyl maleimide, N-ethyl maleimide, N-n-propyl maleimide, N-i-propyl maleimide, N-n-butyl maleimide, N-i-butyl maleimide, N-t-butyl maleimide, N-pentyl maleimide, N-hexyl maleimide, N-cyclohexyl maleimide, N-lauryl maleimide, N-stearyl maleimide, N-phenyl maleimide, N-benzyl maleimide, N-o-toluyl maleimide, N-p-toluyl maleimide, N-methylchloro maleimide, N-phenylmethyl maleimide, and mixtures thereof.